# EUROPEAN PATENT APPLICATION

(11) **EP 2 259 237 A1**
(43) Date of publication of application: **08.12.2010**
(21) Application number: 09161701.9
(22) Date of filing: 02.06.2009
(51) Int. Cl.: G08B 5/36, F21S 6/00, F21S 8/00, F21S 10/00

(54) **Signalling device and method of signaling service quality**

(71) Applicant: Sportpiazza Kalkman, 6582 BZ Heumen (NL)
(72) Inventor: Kalkman, Raimond Pieter Theodorus Iseak, 6581 CE, Malden (NL); de Water, Pascal, 6532 AX, Nijmegen (NL); van der Wielen, Gerardus Wilhelmus Matheus, Malden (NL)
(74) Representative: Ketelaars, Maarten F.J.M.

(57) **Abstract**

The invention relates to a signaling device for signalling for a service in for example a restaurant. The signalling device comprises a housing; at least one light source affixed to the housing; a switch; and, a controller for turning the at least one light source in response to the switch in an activated state and deactivated state.

The controller is further arranged to vary with time at least one visual characteristic of the light source when activated to indicate a time period for which the at least one light source has been in the activated state.

The signalling device enables waiters to see which customer in their service area has been waiting longest for a service and to help him before other customers who have been waiting shorter.

## Description

### TECHNICAL FIELD OF THE INVENTION

The invention relates to a signalling device and more particularly to devices directed to signalling for service at a restaurant or bar. The method further relates to a method of signalling service quality.

### BACKGROUND OF THE INVENTION

When seated at a table, a patron waiting for service such as to order another drink, or to request a bill or a check, often has difficulty in catching the attention of the waiter or waitress. In China, one signals that the teapot is empty by opening the lid. It is customary in some places to signal for another bottle of wine or beer by inverting the bottle. These methods are not always effective in getting the attention of busy or inattentive staff. Keeping impatient diners waiting loses customers and keeps tables needlessly occupied. A method for more effectively getting the attention of the wait staff will enhance the business of the restaurant.

US6945664 discloses a simple device for signalling to get the attention of a waiter or waitress in a restaurant. A battery in a housing powers the lights through a gravity actuated switch and an intermittent flashing circuit. The housing is inverted to signal for service. In a restaurant with a multitude of tables, a multitude of signalling devices could be an indication of the quality of service. The devices do not indicate to the wait staff who should be serviced first.

### SUMMARY OF THE INVENTION

The object of the invention is to provide an improved signalling device for getting attention of the wait staff to enable the waiting staff to improve their service. It is yet another object that all the devices together in a bar or restaurant provide an indication of quality aspects of the service.

According to the invention, this object is achieved by a signalling device having the features of Claim 1. Advantageous embodiments and further ways of carrying out the invention may be attained by the measure mentioned in the dependent claims.

A signalling device for signalling for service comprises a housing, at least one light source affixed to the housing, a switch and, a controller for turning the at least one light source in response to the switch in an activated state and deactivated state and is **characterized in that** the controller is further arranged to vary in time at least one visual characteristic of the light source when activated to indicate a time period for which the at least one light source is in the activated state. These features enables waiters to see which customer in their service area has been waiting longest and to help him before other customers who have been waiting shorter.

The at least one visual characteristic could be at least one or a combination of features selected from a group comprising at least one of: intensity of the emitted light, colour of the emitted light, light emitting area of device, course in time of intensity of the emitted light.

In an embodiment, the controller is further arranged to vary with time the at least one visual characteristic according to a predefined pattern after activation.

In a further embodiment, the predefined pattern includes a first time period in which the intensity of the emitted light gradually increases from a low intensity to a high intensity. This feature allows to provide a request for service indication which does not negatively influence the ambience in a place of entertainment, i.e. it does not abruptly change the ambience but does so gradually, making the use of the device also acceptable for customers who are not requesting a service. Initially, the low intensity of the emitted light will hardly influence the ambiance of other customers in the place of entertainment.

In another embodiment, the first time period is preceded by a second time period in which the intensity of the emitted light gradually increases from a low intensity to a high intensity, wherein the second period is substantially shorter than the first time period. This feature enables a customer to verify that the device is properly working, i.e. that it is able to produce a sufficient amount of light.

In an embodiment of the invention, the controller is further arranged to change the duration of the predefined pattern. This enables us to deploy the signalling device in different circumstances. For example, in a bar a customer would like to be served in a shorter time than in a luxurious place to eat.

In an embodiment of the invention, the controller is arranged to alternating increasing and decreasing the intensity of the emitted light. This pattern is used preferably after the device has been activated to indicate that a minimal waiting time has already passed. Additionally, the intensity of the emitted light is alternated with a frequency which increases with time. Now, the frequency is used as an indication for the waiting time. The higher the frequency, the longer the waiting time.

In an embodiment, the device further comprises a light sensor for sensing the intensity of the ambient light, wherein the controller is adapted to control the intensity of the light source dependent on the sensed intensity of the ambient light. These features are advantageous in places where the ambient light can vary significantly. By adapting the intensity to the intensity of the ambient light, the device can on one hand always be noticed by the waiter while the intensity does not irritate the customer who is near the device.

In an embodiment, the device comprises a transmitter for transmitting a signal to a receiver indicating that the light source has been activated for a predetermined maximum period of time and wherein the controller is adapted to detect that the light source has been activated for a predetermined maximum period of time period and to submit an associated signal to the transmitter. These features enable the device to indicate to a waiter that a customer has been waiting for at least a predetermined period of time and that the waiter should serve this customer. This is an additional indication to a waiter that he should take care of his clients.

In an embodiment, the device is adapted to register subsequent time periods of activation of the light source in a memory. This feature enables to provide a means of determining the quality of service over a period of time and also of comparing the service of different waiters.

Another aspect of the invention is to improve the quality of service in a place of entertainment. This could be achieved by the use of a signalling device according to invention for requesting a service in a place of entertainment and by a method comprising: placing a signalling device according to the invention on one or more tables, monitoring for at least one signalling device which is activated by a customer, if more than one signalling device is active determining which one of the signalling devices has been activated longest , switching off the signalling device, serving the customer.

Yet another aspect of the invention is to provide a solution for an owner of a place of entertainment to indicate the quality of service. This could be achieved by a method of indicating to passersby a quality of service in a place of entertainment. The method comprises providing a plurality of signalling devices according to any of the proceeding claims 1 - 11 on a plurality of tables wherein the devices are activated by clients requesting a service at said table and deactivated by waiters when requesting said client to mention his requested service. The number of active signalling devices is now an indication of the quality of service, especially the speed of service. The more devices are active the longer the waiting time. This enables passersby to see from the street at a glance whether they could be served quickly or whether they have to wait for a longer time. This helps them to make their decision whether or not to go into said bar or restaurant and requesting a service.

It will be clear that the various aspects mentioned in this patent application may be combined and may each be considered separately for a divisional patent application.

### BRIEF DESCRIPTION OF THE FIGURES

These and other aspects, properties and advantages of the invention will be explained hereinafter based on the following description with reference to the drawings, wherein like reference numerals denote like or comparable parts, and in which:
Figure 1 is a sectional view of an embodiment of a signalling device according to the invention;
Figure 2 shows an embodiment of circuitry;
Figure 3 shows a side view of second embodiment of the invention;
Figure 4 shows a side view of a third embodiment of the invention; and
Figure 5 illustrates an example of the course of the light intensity in time emitted from the signalling device according to the invention.

### DESCRIPTION OF EMBODIMENTS

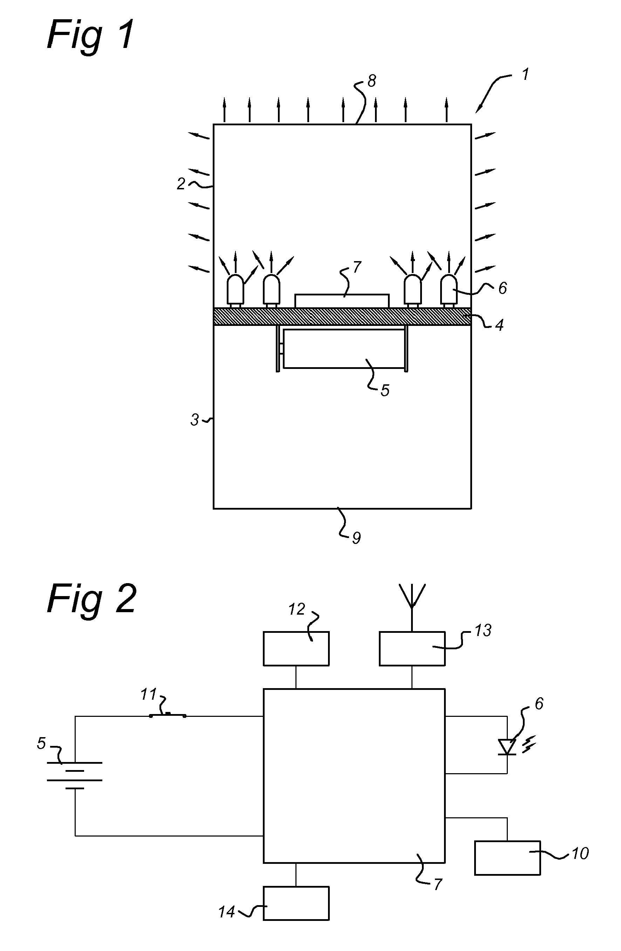

Figure 1 shows a sectional view of a first embodiment of a signalling device 1 according to the invention. The signalling device 1 comprises a housing 2, having a flat top 8 and a flat bottom 9. The top 8 and bottom 9 could have any form for example, a circle, a triangle, a square or a pentagon. Preferably, the top 8 and bottom 9 form a surface which allows the device 1 to be put stable on a table. Both surfaces are preferably provided with a non-skid layer. In the housing a circuit board 4 is present. On the circuit board 4 a power source 5, e.g. a battery, one or more light sources 6 and a controller 7 are mounted. Figure 2 shows an embodiment of the electronic circuitry that could be provided on the circuit board 4. Preferably, the light source(s) 6 in the signalling device 1 are LED's.

A first part 2 of the housing is made from a transmissive material to allow light emitted by the light sources 6 to exit the lighting device 1. The housing further comprises a second part 3, which could also be made from a transmissive material. The material of the first and second part is preferably a nonbreakable material, such that the device will not break when it falls from a table on the floor. The material could be a frosted or translucent material. A translucent material provides a uniform comfortable emission of light. Preferably, the first part 2 is red coloured, indicative for requesting a service, and the second part 3 is green coloured, indicative for idle. By turning the signalling device such that the red coloured part is at the upper side, a customer could indicate that he is requesting a service. A waiter can notice that the upper side is red coloured, and go to said customer. By means of the present invention the course in time of a characteristic of the emitted light is an indication of the time duration after the last activation of the signalling device, in other words the time a customer has been waiting. Characteristics of the emitted light that could vary with time could be one of the amount of the emitted light, the intensity of the emitted light, the surface area of emitted light, the colour of the emitted light, or any combination of such characteristics. The change in time or the repetition time of a pattern could be used as an indication of the waiting time. In an example described below, this will be described in more detail.

Preferably, the circuit board 4 is placed half way the top 8 and bottom 9 of the signalling device 1 and between the first and second part 2,3. At said position, around the housing a hand grip or strip could be provided, to take hold of the signalling device and to turn it up side down. The strip or hand grip could be provided with advertisements. By means of a gravity switch, the orientation of the signalling device could be detected. The light sources will be activated when the first part 2, i.e. the red coloured part, is on top.

Preferably, the signalling device 1 has a height which is higher than the tallest glass, such that the signalling device 1 appears above the tallest glass.

Figure 2 illustrates the electronic circuitry that could be used to implement the invention. The electronic circuitry is powered by an energy storage, for example a battery, which could be of a rechargeable type, for example li-ion or Ni-MH. In the latter case, the electronic circuitry comprises a charging unit (not shown) to charge the energy storage and a connector to connect the charging unit to a mains supply. The electronic circuitry could further comprise a solar cell to charge the energy storage. The circuitry further comprises a processing unit 7, a switch 11, light source(s) 6, and a light sensor 10. The light source 6 comprises one or more LED's to generate the light to be emitted. The switch 11 in the embodiment shown in figure 1 could be a tilt switch or a gravity activated switch. This enables the device to switch the light source(s) 6 on as soon as the first part 2 is turned up and to turn the light source(s) 6 off as soon as the first part 2 is turned down, i.e. in inverted position. Instead of a gravity switch any other suitable switch could be used, for example a touch switch, push-type switch, pressure switch, etc.

The processor 7 detects, by means of the switch 11, whether the signalling device should be switched to an active or idle state. The processor 7 or controller is arranged to vary in time at least one visual characteristic of the light sources 6 when activated to indicate a time period for which the at least one light source is in the activated state. The at least one visual characteristic is at least one or a combination of features selected from a group comprising at least one of: intensity of emitted light, colour of the emitted light, light emitting area of device, course in time of intensity of emitted light.

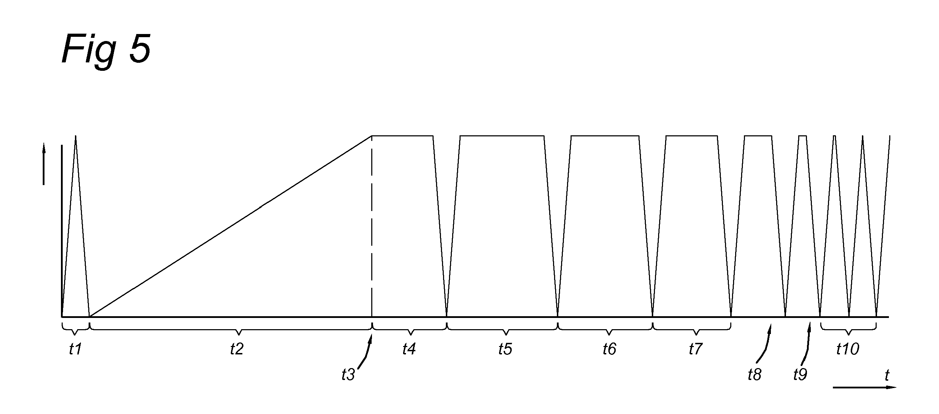

In the idle state the light sources 6 are not empowered. In the activated state the light sources 6 are controlled in time such that a characteristic of the emitted light provides an indication to a waiter regarding the waiting time of a customer. In an embodiment, the processor 7 is arranged to vary in time the at least one visual characteristic according to a predefined pattern after activation. Figure 5 shows an embodiment of a pattern which corresponds to the variation of the intensity of the emitted light in time. According to figure 5, during time period t1, the intensity is rapidly increased to a maximum intensity and then rapidly decreased to no or almost no intensity. Period t1 is used to provide an indication to a customer that the signalling device is working properly. The period t1 could be in the range of 0,2 - 1 seconds. After period t1, in period t2, the intensity is slowly increased to the maximum intensity. In this period the intensity is an indication of the waiting time. Period t2 could be in the range of 2 - 10 minutes. By comparing the intensity of the different signalling devices, a waiter can recognize which customer has been waiting for the longest period. At time t3, the intensity has the maximum intensity. Then for a period t4, the intensity has the highest intensity and at the end of period t4 the intensity will rapidly decrease to no or almost no intensity. Period t4 is followed by periods t5, t6, t7, t8, t9. The periods t5 - t9 are characterized by a rapid increase of the intensity to the maximum intensity at the beginning, a period with maximum intensity and a rapid decrease of the intensity to a minimum at the end of the period. Furthermore, in time, the period with maximum intensity decreased with time. Therefore, t5 > t6 > t7 > t8 > t9. In this period, the time between two successive lowerings of the intensity is a further indication of the customer waiting time. The periods t5 could be 10 second and wherein each subsequent period is 0,5 - 1 seconds shorter. These periods extend the usage of the signalling device as an indication of the waiting time by 1 or 2 minutes. Period t9 is followed by t10, in this period the intensity changes rapidly between maximum and minimum intensity. The cyclic period in t10 could be in the range of 1 - 2 second. When the signalling device is in period t10, the device is indicating that the customer has been waiting for a maximum allowable time, and that he must be served as soon as possible. Instead of decreasing the intensity to a minimum between two successive periods, the intensity could be decreased to a predefined level, such that a waiter still can notice the waiting time.

It should be noted that the processor need not necessarily be arranged to perform all the subsequent path of light intensity as shown in figure 5. Any other suitable combination could be used. For example, a combination of period t1, t2, t4 and t10, or a combination of t2 and t1, or a combination of t5 - t10. In the latter case, the period t5 should be longer then 10 seconds, for example 30 seconds. It might be clear that the number of subsequent periods t5 - t9 depends on the selected duration of t5 and t9 and the predefined maximum allowable waiting time, i.e. the time at which t10 is expected to start.

Furthermore, in an embodiment, the respective durations of any of the periods described above could be adapted according to the requirements of the user.

The electronic circuitry could be provided with a light sensor 10. The light sensor 10 is used to sense the intensity of the ambient light. A sensing signal is supplied to an input of the processor. The processor 7 is adapted to control the intensity of the light emitted by the light source(s) 6 under control of the sensing signal. This allows us to adapt the intensity of the emitted light from the signalling device such that the maximum intensity is not cumbersome and does not negatively influence the atmosphere in the place of entertainment, and at least not the atmosphere around the signalling device. When the device is used on an outdoor café table, the intensity which is not regarded cumbersome by a customer in broad daylight could be much higher than at night. Furthermore, this allows a waiter to easily notice the emitted light in broad daylight.

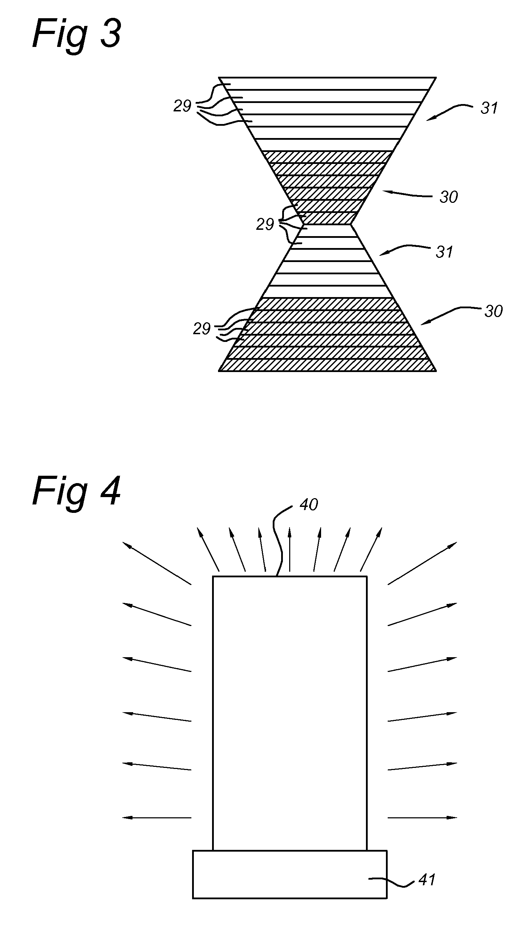

Figure 3 illustrates a second embodiment of the appearance of the signalling device. In this embodiment the signalling device has the shape of a hourglass. The signalling device is build-up by means of discs 29 of translucent material. Each disc 29 has a corresponding light source. Each corresponding light source can individually be controlled by the processor such that each disc 29 can be in an illuminating and non illuminating state. In this embodiment, the appearance of the illuminating discs forming illuminating parts 30 and non-illuminating discs, forming non-illuminating parts 31, indicate the waiting time in the same way as a hourglass indicates the time. In this embodiment, a first turn over of the signalling device will activate device and a subsequent turnover will deactivate the device. A gravity switch could be used to activate and deactivated the signalling device.

Figure 4, illustrates a third embodiment of the invention. In this embodiment, the device comprises a touch switch 40 to turn the signalling device in the active and idle state. The touch switch 40 could be on top of the signalling device, but could also be positioned on other locations on the lamp, for example the base part 41. Similarly, the signalling devices shown in figures 1 and 3 could be provided with a touch switch.

In another embodiment, the signalling device has the shape of a drinking glass and consist of a stack of discs as shown in figure 3. The height off illuminating discs visualize the amount of liquid in the glass. In this embodiment, the amount of illuminating discs is an indication of the waiting time. A full glass could be an indication that the customer is thirsty and needs a drink. On the other hand, an empty glass, i.e. only one disc is illuminating could also be used as indication that the customer needs a drink. The place of entertainment has to decide which definition will be used to indicate the waiting time.

The signalling device 1 could further comprise a memory 12 for storing the time periods between activation of the lighting device and subsequent deactivation by a waiter. This allows for monitoring the quality of service over time. The memory could be part of the processor 7. The signalling device could further comprise a transmitter for transmitting a signal to a receiver (not shown) which is carried by a waiter. The transmitter sends a signal to the receiver when the signalling device is in the active state for a period which extends a predefined time period. In response to said signal, the receiver will vibrate signalling the waiter that a customer has been requesting for a service for a time period which is becoming too long.

The signalling device 1 could further comprise a proximity sensor 14. The proximity sensor 14 detects whether a particular device, which is carried by a waiter, is in proximity of the signalling device when the device is deactivated. In this way, deactivations by a waiter could be noticed and corresponding waiting time is registered in the memory 12. Furthermore, which waiter served the customer could be registered in the memory 12.

The signalling device described above, when applied on all tables, i.e. at least a plurality of tables, in a restaurant or café provides a means for passersby to see at a glance the quality of service in the restaurant or café. When a lot of signalling devices are coloured red and have an high intensity, this is an indication that the service has a low quality, i.e. that they have to wait for a relatively long time before they are served. This enables passersby to decide whether they enter the restaurant or not.

Furthermore, as the signalling device could be used on tables of a pavement cafe, the housing of the signalling device is preferably watertight. In this way, the electronic parts of within the housing are protected against wetness.

The signalling device could further comprise one or more additional switches which enables the customer to indicate the type of service request, for example that he would like to pay the services or order another drink. The colour or number of short variations in the intensity could be used to indicate the type of service. In this way, a waiter could see from a distance what type of service is requested and act accordingly.

The measures described hereinbefore for embodying a signalling device according to the invention can obviously be carried out separately or in parallel or in a different combination or if appropriate be supplemented with further measures; it will in this case be desirable for the implementation to depend on the field of application of the signalling device. The invention is not limited to the illustrated embodiments. Changes can be made without departing from the idea of the invention. Thus, the signalling device can be embodied as a rotating beacon light or revolving light. In that case, the rotating speed can be used as an indication for the waiting time. The faster the light rotates the longer a customer has been waiting. Instead of the light intensity, the colour could vary with time. By gradually changing the colour from yellow to red, the signalling device indicates the waiting time and a waiter could use said information to prioritize which table to serve first.

## Claims

1. A signalling device for signalling for service comprising:
- a housing;
- at least one light source affixed to the housing;
- a switch; and,
- a controller for turning the at least one light source in response to the switch in an activated state and deactivated state;
**characterized in that** the controller is further arranged to vary with time at least one visual characteristic of the light source when activated to indicate a time period for which the at least one light source has been in the activated state.

2. A signalling device according to Claim 1, **characterized in that** the at least one visual characteristic is at least one or a combination of features selected from a group comprising at least one of: intensity of the emitted light, colour of the emitted light, light emitting area of device, course in time of intensity of the emitted light.

3. A signalling device according to one of the preceding claims, **characterized in that** the controller is further arranged to vary with time the at least one visual characteristic according to a predefined pattern after activation.

4. A signalling device according to claim 3, **characterized in that**, the predefined pattern includes a first time period in which the intensity of the emitted light gradually increases from a low intensity to a high intensity.

5. A signalling device according to claim 4, **characterized in that**, the first time period is preceded by a second time period in which the intensity of the emitted light gradually increases from a low intensity to a high intensity, wherein the second period is substantially shorter than the first time period.

6. A signalling device according to one of the claims 3 - 5, **characterized in that**, the controller is further arranged to change the duration of the predefined pattern.

7. A signalling device according to one of the claims 1 - 6, **characterized in that**, the controller is further arranged to alternating increasing and decreasing the intensity of the emitted light.

8. A signalling device according to claim 7, **characterized in that**, the intensity of the emitted light is alternated with a frequency which increases in time.

9. A signalling device according to one of the preceding claims, **characterized in that**, the device further comprises a light sensor for sensing the intensity of the ambient light, wherein the controller is adapted to control the intensity of light source in dependence of the sensed intensity of the ambient light.

10. A signalling device according to one of the preceding claims, **characterized in that**, the device further comprises a transmitter for transmitting a signal to a receiver indicating that the light source is activated for a predetermined maximum period of time and wherein the controller is adapted to detect that the light source is activated for a predetermined maximum period of time period and to submit an associated signal to the transmitter.

11. A signalling device according to one of the preceding claims, **characterized in that**, the device is further adapted to register subsequent time periods of activation of the light source in a memory.

12. Use of a signalling device according to one of the preceding claims for requesting a service in a place of entertainment.

13. Method of indicating a quality of service in a place of entertainment to passersby, the method comprising:
- providing a plurality of signalling devices according to any of the proceeding claim 1 - 11 on a plurality of tables.
